(19) Europäisches Patentamt
European Patent Office
Office européen des brevets

(11) EP 2 621 209 A1

(12) EUROPEAN PATENT APPLICATION
published in accordance with Art. 153(4) EPC

(43) Date of publication:
31.07.2013 Bulletin 2013/31

(51) Int Cl.:
*H04W 24/00* (2009.01)

(21) Application number: 11826352.4

(22) Date of filing: 20.06.2011

(86) International application number:
PCT/CN2011/075949

(87) International publication number:
WO 2012/037825 (29.03.2012 Gazette 2012/13)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 21.09.2010 CN 201010293769

(71) Applicant: ZTE Corporation
Shenzhen, Guangdong 518057 (CN)

(72) Inventors:
• ZHANG, Pengshuai
Shenzhen
Guangdong 518057 (CN)
• YE, Shaoqiang
Shenzhen
Guangdong 518057 (CN)

• ZENG, Zhaohua
Shenzhen
Guangdong 518057 (CN)
• LI, Ping
Shenzhen
Guangdong 518057 (CN)
• ZHANG, Xianzhou
Shenzhen
Guangdong 518057 (CN)

(74) Representative: Carpintero Lopez, Francisco et al
Herrero & Asociados, S.L.
C/Alcalá 35
28014 Madrid (ES)

(54) **METHOD AND SYSTEM FOR REVERSE TEST COVERAGE**

(57) The present invention relates to the technical field of communications and provides a method for reverse test coverage, wherein the method comprises: a background administration OMC configuring parameters of reverse test coverage for a base station and synchronously configuring the parameters to a mobile transmitter; the mobile transmitter transmitting a signal containing a longitude, a latitude, a timestamp and a transmission power to a base station according to the configuration; the base station performing a smoothing processing according to the signal and measured data, and then transmitting a computed path loss and a computed RSRP to the OMC; a background server storing the data containing the path loss and the RSRP transmitted by the OMC; and a network planning & optimization tool acquiring the data for analysis to obtain a distribution graph showing a downlink signal coverage level of the base station. The present invention further provides a system for reverse test coverage. The method or the system provided by the present invention can fully reflect the real coverage condition of a signal, expand the test range and improve the test sensitivity.

Fig.1

## Description

### Field of the Invention

The present invention relates to the technical field of communications, and in particular to a method and a system for reverse test coverage.

### Background of the Invention

In the field of mobile communications, due to the influence of multipath effect, slow fading, fast fading, Doppler effect and the like in a radio transmission process, it is difficult to find a precise transmission model to plan a wireless network. Therefore, a field coverage test is one of the most important and reliable measures for evaluating system performance.

In general, a related coverage test will be performed in the initial stage of network setup and during normal operation of the network. By means of the related coverage test, the network performance of a wireless network in a real environment is known, and the actual and experience parameters required for the planning, operation and maintenance of the network are mastered, which provide a real and valuable empirical evidence for the network planning and gather experience for the network setup.

In the current Long Term Evolution (LTE) Time-Division Duplex (TDD) technology, a sweep generator is adopted to test signal coverage. With limitations in that the dynamic range and sensitivity are limited in the common-frequency measurement of multi-channel signal, the testing result cannot precisely reflect the real coverage condition of the signal.

### Summary of the Invention

In view of this, the main objective of the present invention is to provide a method and a system for reverse test coverage, in order to expand the test range and improve the test sensitivity.

The method for reverse test coverage is provided by the present invention, wherein the method comprises:

an Operations & Maintenance Center (OMC) configuring parameters of reverse test coverage for a base station and synchronously configuring the parameters to a mobile transmitter;
the mobile transmitter transmitting a signal containing a longitude, a latitude, a timestamp and a transmission power to the base station according to the configuration;
the base station performing a smoothing processing according to the signal and measured data, and then transmitting a computed path loss and a computed Reference Signal Receiving Power (RSRP) to the OMC, wherein the smoothing processing comprises: judging whether the data is legal, and if so, parsing the data and combining the data with the measured data for computation to obtain the path loss and the RSRP;
a background server storing data containing the path loss and the RSRP transmitted by the OMC; and
a network planning & optimization tool acquiring data in the background server for analysis to obtain a distribution graph showing a downlink signal coverage level of the base station.

Preferably, the step of the OMC configuring the parameters of reverse test coverage for the base station and synchronously configuring the parameters to the mobile transmitter comprises:

before the network is set up, bearing a signal of the mobile transmitter on a conventional service subframe on which there is no normal User Equipment (UE) service;
configuring for the base station to support the reverse test coverage of multiple mobile transmitters and reducing transmission code rate, each mobile transmitter using at least four Resource Blocks (RBs) for processing and being configured with a different Radio Network Temporary Identifier (RNTI), and configuring a value of the RNTI for scrambling as a Group identifier (Gid) of the mobile transmitter; and
using an extended Cyclic Prefix (CP).

Preferably, the step of the OMC configuring the parameters for reverse test coverage for the base station and synchronously configuring the parameters to the mobile transmitter comprises:

before the network is set up, bearing a signal of the mobile transmitter on an Uplink Pilot Time Slot (UpPTS) of a special subframe, configuring a Sounding Reference Signal (SRS) on a conventional service subframe, allocating UpPTS bandwidth of the whole special subframe to the mobile transmitter, and using an extended CP.

Preferably, the step of the OMC configuring the parameters of reverse test coverage for the base station and synchronously configuring the parameters to the mobile transmitter further comprises:

using $c_{\text{init}} = n_{\text{RNTI}} \cdot 2^{14} + \lfloor n_s/2 \rfloor \cdot 2^9 + N_{\text{ID}}^{\text{cell}}$ by a scrambling sequence, where $n_{\text{RNTI}}$ is configured by the OMC and equal to the Gid allocated to the mobile transmitter;
using a Quadrature Phase Shift Keying (QPSK) by a modulation way to modulate a constellation diagram to make the constellation diagram the same as the QPSK constellation diagram of a normal UE service; and
configuring a CP of the subframe for reverse test coverage as the extended CP.

Preferably, he step of the OMC configuring the parameters for reverse test coverage for the base station and synchronously configuring the parameters to the mobile transmitter further comprises:

when the network is set up, if the signal of the mobile transmitter is born on the conventional service subframe, a Media Access Control (MAC) layer scheduling a normal UE service on the service subframe for reverse test coverage to other subframes according to the configured parameters, and transmitting the parameters of reverse test coverage to an uplink physical layer to notify the uplink physical layer to receive the signal transmitted by the mobile transmitter; and
if the signal of the mobile transmitter is born on the UpPTS of the special subframe, allocating the SRS to the conventional service subframe.

The present invention provides a system for reverse test coverage, comprising: an Operations & Maintenance Center (OMC), a mobile transmitter, a base station, a background server and a network planning & optimization tool, wherein
the OMC is configured to configure parameters of reverse test coverage for the base station and synchronously configure the parameters to the mobile transmitter;
the mobile transmitter is configured to transmit a signal containing a longitude, a latitude, a timestamp and a transmission power to the base station according to the configuration;
the base station is provided with a data processing module and configured to perform a smoothing processing according to the signal and measured data, and then transmit a computed path loss and a computed Reference Signal Receiving Power (RSRP) to the OMC, wherein the smoothing processing comprising: judging whether the data is legal, and if so, parsing the data and combining it with the measured data for computation to obtain the path loss and the RSRP;
the background server is configured to store data containing the path loss and the RSRP transmitted by the OMC; and
the network planning & optimization tool is configured to acquire data in the background server for analysis to obtain a distribution graph showing a downlink signal coverage level of the base station.
Preferably, the configuration for the base station by the OMC comprises the followings:

before the network is set up, a signal of the mobile transmitter is born on a conventional service subframe on which there is no normal User Equipment (UE) service;
the base station is configured to support the reverse test coverage of multiple mobile transmitters and is reduced in transmission code rate, each mobile transmitter using at least four Resource Blocks (RBs) for processing and being configured with a different Radio Network Temporary Identifier (RNTI), and a value of the RNTI for scrambling is configured as a Group identifier (Gid) of the mobile transmitter; and
an extended Cyclic Prefix (CP) is used.

Preferably, the configuration for the base station by the OMC comprises the followings:

before the network is set up, a signal of the mobile transmitter is born on an Uplink Pilot Time Slot (UpPTS) of a special subframe, an Sounding Reference Signal (SRS) is configured on a conventional service subframe, UpPTS bandwidth of the whole special subframe is allocated to the mobile transmitter, and an extended CP is used.

Preferably, the configuration for the base station by the OMC further comprises the followings:

a scrambling sequence uses $c_{\text{init}} = n_{\text{RNTI}} \cdot 2^{14} + \lfloor n_s/2 \rfloor \cdot 2^9 + N_{\text{ID}}^{\text{cell}}$, where $n_{\text{RNTI}}$ is configured by the OMC and equal to the Gid allocated for the mobile transmitter;

a modulation way uses a QPSK to modulate a constellation diagram to make the constellation diagram the same as the QPSK constellation diagram of a normal UE service; and

a CP of the subframe for reverse test coverage is configured as the extended CP.

Preferably, the configuration for the base station by the OMC further comprises the followings:

when the network is set up, if the signal of the mobile transmitter is born on the conventional service subframe, an Media Access Control (MAC) layer schedules a normal UE service on the service subframe for reverse test coverage to other subframes according to the configured parameters, and transmits the parameters of reverse test coverage to an uplink physical layer to notify the uplink physical layer to receive the signal transmitted by the mobile transmitter; and

if the signal of the mobile transmitter is born on the UpPTS of the special subframe, the SRS is allocated to the conventional service subframe.

By configuring the parameters of reverse test coverage for the base station by the background network administrator OMC and synchronously configuring the parameters to the mobile transmitter, and according to the configuration transmitting the signal containing a longitude, a latitude, a timestamp and a transmission power to the base station by one or more mobile transmitters, the method or the system for reverse test coverage provided by the present invention can fully reflect the real coverage condition of the signal, expand the test range and improve the test sensitivity.

## Brief Description of the Drawings

Fig. 1 is a schematic flow chart of a method for reverse test coverage according to one embodiment of the present invention;

Fig. 2 is a schematic structural diagram of a physical layer signal according to one embodiment of the present invention;

Fig. 3 is a schematic flow chart of a method for performing reverse test coverage by multiple mobile transmitters before a network is set up according to one embodiment of the present invention;

Fig. 4 is a schematic diagram showing the pilot frequency and data multiplexing of a single Orthogonal Frequency Division Multiplexing (OFDM) symbol according to one embodiment of the present invention;

Fig. 5 is a schematic flow chart of a method for performing reverse test coverage by a single mobile transmitter before a network is set up according to one embodiment of the present invention;

Fig. 6 is a schematic flow chart of a method for performing reverse test coverage after a network is set up according to one embodiment of the present invention; and

Fig. 7 is a schematic structural diagram of a system for reverse test coverage according to one embodiment of the present invention.

## Detailed Description of Embodiments

The implementation of objective, functional features and advantages of the present invention will be further explained in conjunction with the embodiments and with reference to the drawings. It should be understood that the specific embodiments described herein are only for explaining the present invention but not intended to limit the present invention.

In the present invention, the mobile transmitter may be a User Equipment (UE) , and a Global Positioning System (GPS) receiver, a transmission antenna and the like are provided for the communication of a user via a wireless network; and the receiving terminal may be a base station or a fixed receiver in the LTE TDD. Before performing reverse test coverage, the mobile transmitter and receiving terminal need to synchronize clocks by a GPS. With the receiving terminal, which is the base station, as an example, the present invention will be described below in detail.

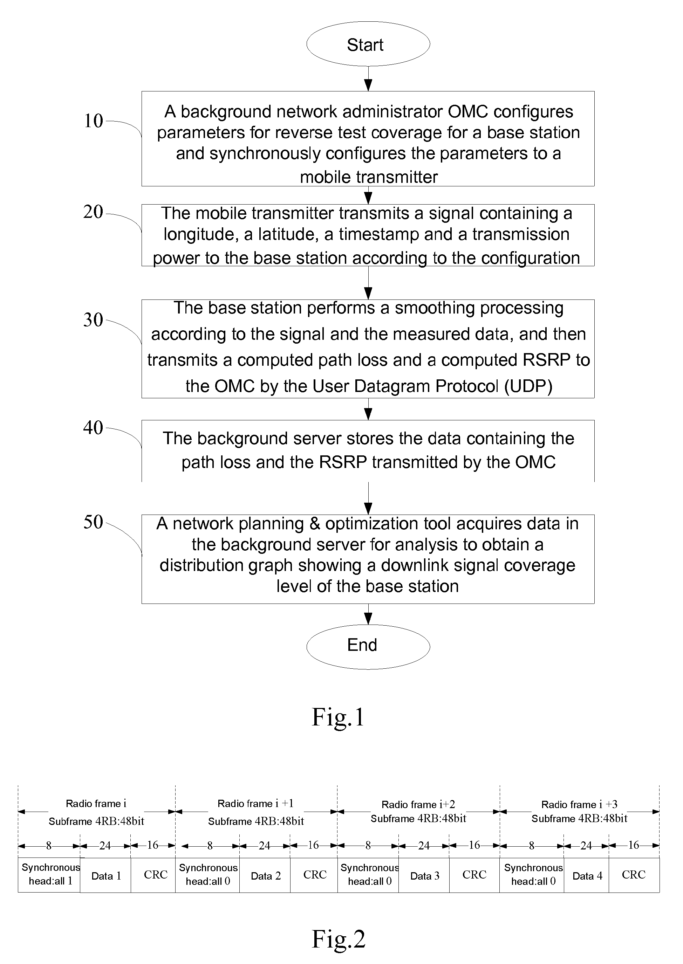

With reference to Fig. 1 which is schematic flow chart of a method for reverse test coverage according to one embodiment of the present invention, the method comprises:

Step 10: a background network administrator Operations & Maintenance Center (OMC) configures parameters of reverse test coverage for a base station and synchronously configures the parameters to a mobile transmitter.

In one embodiment, the OMC may configure the parameters of reverse test coverage for the base station and synchronously configures the parameters to the mobile transmitter according to Table 1 below:

Table 1

| Field name | Existing condition | Range |
|---|---|---|
| Three-layer cell ID | Mandatory | |
| Start/stop reverse test coverage | | |
| Bandwidth | Mandatory | 0-1 (1: start NES test, 0: stop NES test) |
| Physical cell identifier | Mandatory | 0-3 (5/10/15/20M) |
| Number of mobile transmitter performing reverse test coverage | Mandatory | |
| Gid of mobile transmitter | Mandatory | |
| DMRS cyclic shift | Mandatory | |
| RNTI | Mandatory | |
| Modulation way | Mandatory | 0-28 |
| RB initial position | Mandatory | |
| Number of RB occupied by mobile transmitter | Mandatory | 4(default) |
| Signal transmission subframe by mobile transmitter | Mandatory | 0-9 |
| Data transmission period of mobile transmitter | Mandatory | |
| Bearing way | Mandatory | 0-1 ( 0: born on a conventional service subframe, 1: born on a special subframe) |

Step 20: the mobile transmitter transmits a signal containing a longitude, a latitude, a timestamp and a transmission power to the base station according to the configuration.

After the parameters are configured, the mobile transmitter may read the parameters into its own memory by a memory card and transmit the signal to the base station according to the configuration for the base station to compute a path loss and a Reference Signal Receiving Power (RSRP). In one embodiment, the signal may be transmitted to multiple base stations by either one or more mobile transmitters according to a test path.

Step 30: the base station performs a smoothing processing according to the signal and the measured data, and then transmits the computed path loss and RSRP to the OMC according to the User Datagram Protocol (UDP), wherein

the smoothing processing comprises: judging whether the data is legal, and if so, parsing the data and combining the data with the measured data of an uplink physical layer for computation to obtain the path loss and the RSRP, wherein the path loss and the RSRP are important parameters for computing a signal coverage level. In one embodiment, a data processing module may be arranged in the base station to comprehensively compute the received data and measured data to obtain the path loss and the RSRP and further buffer the path loss and the RSRP to the background server for calling.

Step 40: the background server stores the data containing the path loss and the RSRP transmitted by the OMC, wherein

in one embodiment, the background server may be a data acquisition apparatus which can store various data transmitted by the OMC.

Step 50: In the subsequent process, a network planning and optimization tool acquires the data in the background server for analysis to obtain a distribution graph showing the downlink signal coverage level of the base station. The analysis and processing of network planning and optimization can be further performed on the network according to the distribution graph showing the downlink signal coverage level.

The embodiment of the present invention obtains the distribution graph showing the downlink signal coverage level which can reflect the signal coverage condition by the steps above, which expands the test range and improves the test sensitivity.

The signal coverage may be tested before and after the network is set up. In one embodiment, before the network is set up, a signal may be transmitted to the base station by multiple mobile transmitters and the base station may be configured as follows:

Before the network is set up, the signal of the mobile transmitter is born on the conventional service subframe on which there is no normal UE service. The signal sent by the mobile transmitter may be divided into 4 segments to be transmitted, as shown in Fig. 2, each segment of the signal comprises a synchronous head of 8 bits, an original signal of 24 bits and a Cyclic Redundancy Check (CRC) code of 16 bits. A physical layer transmits and demodulates information source data of (8+24) bits at each radio frame and subframe j. The receiving terminal reports the demodulated data of 32 bits and a CRC identifier bit to a high layer; and the high layer determines to forward or discard the 4 groups of data according to the synchronous head and the CRC identifier bit comprising the initial 4 continuous frames of the synchronous head.

The base station is configured to support the reverse test coverage of multiple mobile transmitters. Each mobile transmitter uses at least four Resource Blocks (RBs) for processing and is configured with a different Radio Network Temporary Identifier (RNTI) in order to be distinguished, and the value of the RNTI for scrambling is configured as a Group identifier (Gid) of the mobile transmitter; and when multiple mobile transmitters transmit a signal to the base station, the base station may be distinguished by the Gid.

A scrambling sequence uses $c_{\mathrm{init}} = n_{\mathrm{RNTI}} \cdot 2^{14} + \lfloor n_{\mathrm{s}}/2 \rfloor \cdot 2^9 + N_{\mathrm{ID}}^{\mathrm{cell}}$, where $n_{\mathrm{RNTI}}$ is configured by the OMC and equal to the Gid allocated for the mobile transmitter.

A modulation mode uses a Quadrature Phase Shift Keying (QPSK) to modulate a constellation diagram to make it the same as the QPSK constellation diagram of a normal UE service.

To reach a transmission distance of 5km, the extended Cyclic Prefix (CP) is used. The outdoor transmission distance of the current base station is generally 3 to 5km, while the extended CP can achieve a relatively longer transmission distance. All the symbols of the subframe for the reverse test coverage may be configured as the extended CP, and the base station adopts the extended CP way irrespective of the number of layers of cell for transmission so as to ensure that all the receiving users have the same CP way at the moment of reception when the whole network has the mobile transmitter. The processing of the conventional subframe with the reverse test coverage service is defined between the mobile transmitter and the base station and is specified by a protocol.

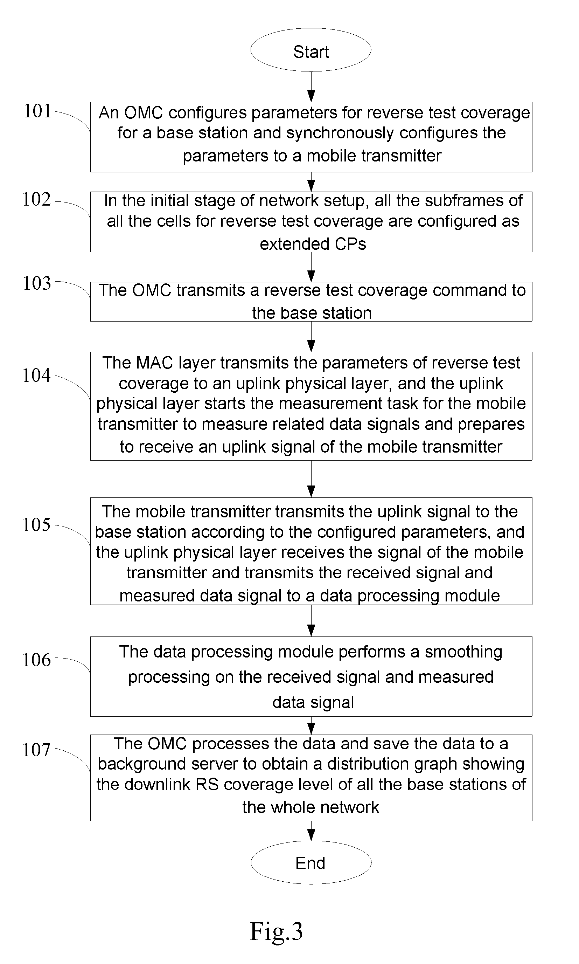

With reference to Fig. 3, the reverse test coverage may specifically comprise the following steps if by multiple mobile transmitters:

Step 101: an OMC configures parameters for reverse test coverage for a base station (see Table 1) and synchronously configures the parameters to a mobile transmitter.

Step 102: in the initial stage of network setup, all the subframes of all the cells for reverse test coverage are configured as extended CPs.

Step 103: the OMC transmits a reverse test coverage command to the base station, wherein the command contains the related parameters of reverse test coverage required by each module of the base station, and the base station transmits the command and the related parameters to an Media Access Control (MAC) layer after receiving the command.

Step 104: the MAC layer transmits the parameters for reverse test coverage to an uplink physical layer, and the uplink physical layer starts the measurement task for the mobile transmitter to measure related data signals and prepares to receive an uplink signal of the mobile transmitter.

Step 105: the mobile transmitter transmits the uplink signal to the base station according to the configured parameters, and the uplink physical layer receives the signal of the mobile transmitter and transmits the received signal and measured data signal to a data processing module.

Step 106: the data processing module performs a smoothing processing on the received signal and measured data signal. For example, it is judged that whether the data is legal and whether to discard the data. If the data is legal, the data is parsed and the data is combined with the measured data for computation, and then the processed data is transmitted to the OMC by the UDP.

Step 107: the OMC processes the data to save it to a background server to obtain a distribution graph showing the downlink RS coverage level of all the base stations in the whole network. Subsequently, network planning software may acquire data from the background server in an offline way and analyze the coverage.

In one embodiment, the signal may be transmitted to the base station by a single mobile transmitter before the network is set up, and the base station may be configured as follows.

Before the network is set up, the signal of the mobile transmitter is born on the UpPTS of a special subframe, a Sounding Reference Signal (SRS) is configured on a conventional service subframe, and the Uplink Pilot Time Slot (UpPTS) bandwidth of the whole special subframe is allocated to the mobile transmitter. An extended CP is used in order to reach the transmission distance of 5km.

For a single mobile transmitter, its signal is born on the UpPTS of the special subframe; according to the 36.211 protocol, the UpPTS occupies 2 Orthogonal Frequency Division Multiplexing (OFDM) symbols at most in a time domain, and the uplink signal of the mobile transmitter may be born on the first OFDM symbol. According to the protocol, a Random Access Channel (RACH) needs to be configured on the UpPTS and the SRS is preferably configured on the UpPTS; and the mobile transmitter has no random access process, so it is required to configure the SRS on the conventional service subframe and then the reverse test coverage is performed. If it is required to configure the SRS to other normal service subframes by cell reconfiguration/cell deletion during the normal service is performed by the system, the normal service will be affected. Therefore, such method will be used in the initial stage of the network setup or when the service can be interrupted for a short time due to a few users.

A scrambling sequence uses $c_{\text{init}} = n_{\text{RNTI}} \cdot 2^{14} + \lfloor n_s / 2 \rfloor \cdot 2^9 + N_{\text{ID}}^{\text{cell}}$, where $n_{\text{RNTI}}$ is configured by the OMC and equal to the Gid allocated for the mobile transmitter.

A modulation mode uses a QPSK to modulate a constellation diagram to make it the same as the QPSK constellation diagram of a normal UE service.

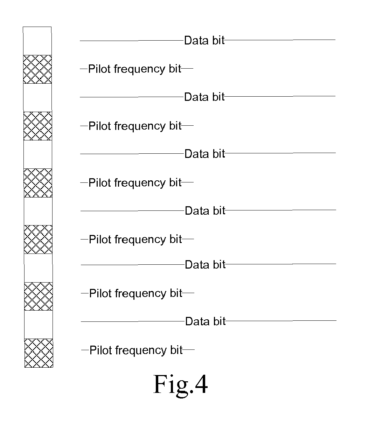

A user data signal and a pilot frequency bit signal are placed on an allocated RB at crossed intervals. The pilot frequency signal occupies subcarriers of even digits, while the user data signal occupies subcarriers of odd digits, specifically referring to what shown in Fig. 4.

The CP of the subframe for reverse test coverage is configured as the extended CP which can achieve a longer transmission distance; all the symbols of the subframe for reverse test coverage may be configured as the extended CP, and the base station adopts the extended CP way irrespective of the number of layers of cell for transmission so as to ensure that all the receiving users adopt the same CP way at the reception moment when the whole network has the mobile transmitter. The processing of the conventional subframe with reverse test coverage service is defined between the mobile transmitter and the base station and is specified by a protocol.

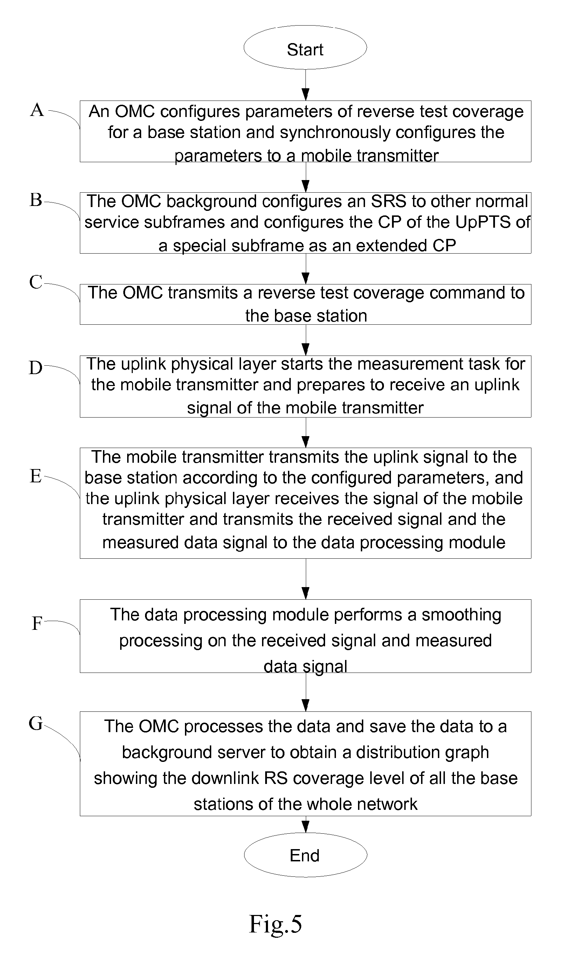

As shown in Fig. 5, in above embodiments, the reverse test coverage may specifically comprise the following steps if by a single mobile transmitter:

Step A: an OMC configures parameters for reverse test coverage for a base station (see Table 1) and synchronously configures the parameters to a mobile transmitter.

Step B: the OMC background configures an SRS to other normal service subframes and configures the CP of the UpPTS of a special subframe as an extended CP.

Step C: the OMC transmits a reverse test coverage command to the base station, wherein the command contains the related parameters of reverse test coverage required by each module of the base station, and the data processing module of the base station transmits the command and the related parameters to an uplink physical layer after receiving the reverse test coverage command.

Step D: the uplink physical layer starts the measurement task for the mobile transmitter and prepares to receive an uplink signal of the mobile transmitter.

Step E: the mobile transmitter transmits the uplink signal to the base station according to the configured parameters, and the uplink physical layer receives the signal of the mobile transmitter and transmits the received signal and the measured signal to the data processing module.

Step F: the data processing module performs a smoothing processing on the signal, for example, it is judged that whether the data is legal and whether to discard the data. If the data is legal, the data is parsed and the data is combined with the measured data for computation, and then the processed data is transmitted to the OMC by the UDP.

Step G: the OMC processes the data to save it to a background server to obtain a distribution graph showing the downlink RS coverage level of all the base stations in the whole network. Subsequently, network planning software may acquire data from the background server in an offline way and analyze the coverage.

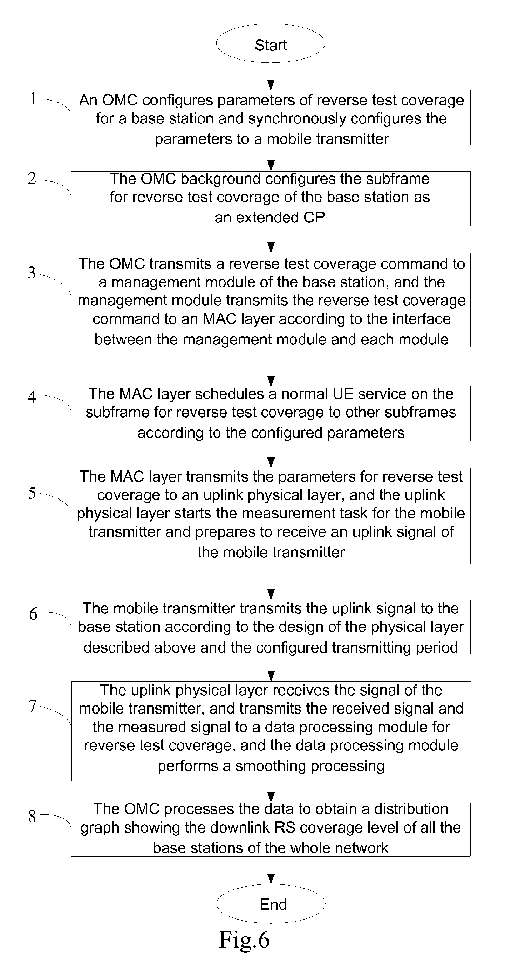

As shown in Fig. 6, after the network is set up, the reverse test coverage may specifically comprises the steps as follows.

Step 1: an OMC configures parameters of reverse test coverage for a base station (see Table 1) and synchronously configures the parameters to a mobile transmitter.

Step 2: the OMC background configures a subframe of reverse test coverage for the base station as an extended CP, wherein if the cell has been configured as the extended CP, the step can be omitted.

Step 3: the OMC transmits a reverse test coverage command to a management module of the base station, and the management module transmits the reverse test coverage command to an MAC layer according to the interface between the management module and each module.

Step 4: the MAC layer schedules a normal UE service on the subframe of reverse test coverage to other subframes according to the configured parameters.

Step 5: the MAC layer transmits the parameters of reverse test coverage to an uplink physical layer, and the uplink physical layer starts the measurement task for the mobile transmitter and prepares to receive an uplink signal of the mobile transmitter.

Step 6: the mobile transmitter transmits the uplink signal to the base station according to the design of the physical layer described above and the configured transmitting period.

Step 7: the uplink physical layer receives the signal of the mobile transmitter, and transmits the received signal and the measured signal to a data processing module, and the data processing module performs a smoothing processing. For example, it is judged that whether the data is legal and whether to discard the data at first. If it is legal, the data is parsed and the data is combined with the measured data for computation, and then the processed data is transmitted to the OMC by the UDP.

Step 8: the OMC processes the data to save it to a background server to obtain a distribution graph showing the downlink RS coverage level of all the base stations in the whole network. Subsequently, network planning software may acquire data from the background server in an offline way and analyze the coverage.

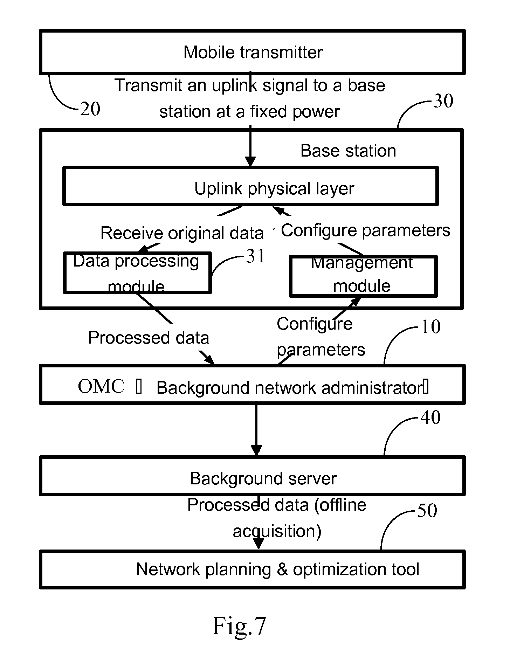

The present invention provides a system for reverse test coverage, which can implement the method. With reference to Fig. 7, the system comprises a background network administrator OMC 10, a mobile transmitter 20, a base station 30, a background server 40 and a network planning & optimization tool 50, wherein

the OMC 10 is configured to configure parameters of reverse test coverage for the base station 30 and synchronously configure the parameters to the mobile transmitter 20, and in one embodiment, the OMC 10 can configure the parameters for the base station 30 according to the contents in Table 1 and synchronize the parameters to the mobile transmitter 20 via a memory card for the reverse test coverage;

the mobile transmitter 20 is configured to transmit a signal containing a longitude, a latitude, a timestamp and a transmission power to the base station 30 according to the configuration, and in one embodiment, one or more mobile transmitters 20 may be configured to movably transmit the signal to the base station 30 according to a test path to test signal coverage condition;

the base station 30 is provided with a data processing module 31 and configured to perform a smoothing processing according to the signal and the measured data, and then transmit the computed path loss and RSRP to the OMC 10 according to the UDP, wherein the smoothing processing comprises: judging whether the data is legal, and if so, parsing the data and combining it with the measured data for computation to obtain the path loss and RSRP;

the background server 40 is configured to store the data containing the path loss and RSRP transmitted by the OMC 10, and in one embodiment, the background server 40 may be a data processing apparatus which is configured to store various data transmitted by the OMC 10 and can load software to process the data; and

the network planning & optimization tool 50 is configured to acquire the data in the background server 40 for analysis to obtain a distribution graph showing the downlink signal coverage level of the base station 30, and the network planning & optimization tool 50 may be network planning & optimization software, and can acquire the data from the background server 40 in an offline way for analysis to obtain the distribution graph showing the downlink signal coverage level of the base station 30, so as to plan or optimize the network according to signal strength.

At present, the signal coverage test is implemented by transmitting a signal from the base station 30 to the mobile transmitter 20 and then testing the signal coverage by a sweep Generator, while in the present invention, the signal coverage test is implemented by transmitting a signal from the mobile transmitter 20 to the base station 30, so that it is called the reverse test coverage. To implement the reverse test coverage, it is required to configure parameters to the base station 30 and synchronize the parameters to the mobile transmitter 20, and in one embodiment, the OMC 10 can implement the configuration of the base station 30 according to the configuration contents in Table 1 and the mobile transmitter 20 reads the configured parameters from the base station 30 to implement the synchronization.

Before the network is set up, a signal containing a longitude, a latitude, a timestamp and a transmission power may be sent to the base station 30 by one or more mobile transmitters 20. For example, in one embodiment, the configuration for the base station 30 by the OMC 10 may comprises the followings:

before the network is set up, the signal of the mobile transmitter 20 is born on a conventional service subframe on which there is no normal UE service;

the base station 30 is configured to support the reverse test coverage of multiple mobile transmitters 20, wherein each mobile transmitter 20 uses at least four RBs for processing and is configured with a different RNTI in order to be distinguished, and the value of the RNTI for scrambling is configured as a Gid of the mobile transmitter 20;

a scrambling sequence uses $c_{\text{init}} = n_{\text{RNTI}} \cdot 2^{14} + \lfloor n_s/2 \rfloor \cdot 2^9 + N_{\text{ID}}^{\text{cell}}$, where $n_{\text{RNTI}}$ is configured by the OMC and equal to the Gid allocated for the mobile transmitter;
a modulation way uses a QPSK to modulate a constellation diagram to make it the same as the QPSK constellation diagram of a normal UE service; and
an extended CP is used to reach a transmission distance of 5km.

After the configuration in the embodiment of the present invention is completed, the flow of reverse test coverage may refer to the embodiment in Fig. 3, and thereby no further description is needed.

In another embodiment, before the network is set up, the configuration of the OMC 10 for the base station 30 may comprises the followings:

before the network is set up, the signal of the mobile transmitter 20 is born on an UpPTS of a special subframe, an SRS is configured on a conventional service subframe; the UpPTS bandwidth of the whole special subframe is allocated to the mobile transmitter 20; and an extended CP is used to reach a transmission distance of 5km;

a scrambling sequence uses $c_{\text{init}} = n_{\text{RNTI}} \cdot 2^{14} + \lfloor n_s/2 \rfloor \cdot 2^9 + N_{\text{ID}}^{\text{cell}}$, where $n_{\text{RNTI}}$ is configured by the OMC and equal to the Gid allocated for the mobile transmitter;
a modulation way uses a QPSK to modulate a constellation diagram to make it the same as the QPSK constellation diagram of a normal UE service; and
the CP of the subframe for reverse test coverage is configured as the extended CP.

After the configuration in the embodiment of the present invention is completed, the flow of reverse test coverage may refer to the embodiment in Fig. 5, and thereby no further description is needed.

After the network is set up, the system can perform reverse test coverage according to the steps in the embodiment of Fig. 6, and thereby no further description is needed.

What described above are only preferred embodiments of the present invention, and the scope of patent of the present invention is not limited herein; and the equivalent structure or equivalent flow change made by the description and drawings of the present invention is directly or indirectly applied to other related technical fields and also within the scope of the patent protection of the present invention.

## Claims

1. A method for reverse test coverage, **characterized by** comprising:

   an Operations & Maintenance Center (OMC) configuring parameters of reverse test coverage for a base station and synchronously configuring the parameters to a mobile transmitter;
   the mobile transmitter transmitting a signal containing a longitude, a latitude, a timestamp and a transmission power to the base station according to the configuration;
   the base station performing a smoothing processing according to the signal and measured data, and then transmitting a computed path loss and a computed Reference Signal Receiving Power (RSRP) to the OMC, wherein the smoothing processing comprises: judging whether the data is legal, and if so, parsing the data and combining the data with the measured data for computation to obtain the path loss and the RSRP;
   a background server storing data containing the path loss and the RSRP transmitted by the OMC; and
   a network planning & optimization tool acquiring data in the background server for analysis to obtain a distribution graph showing a downlink signal coverage level of the base station.

2. The method according to claim 1, **characterized in that** the step of the OMC configuring the parameters of reverse test coverage for the base station and synchronously configuring the parameters to the mobile transmitter comprises:

   before the network is set up, bearing a signal of the mobile transmitter on a conventional service subframe on which there is no normal User Equipment (UE) service;
   configuring for the base station to support the reverse test coverage of multiple mobile transmitters and reducing transmission code rate, each mobile transmitter using at least four Resource Blocks (RBs) for processing and being configured with a different Radio Network Temporary Identifier (RNTI), and configuring a value of the RNTI for scrambling as a Group identifier (Gid) of the mobile transmitter; and
using an extended Cyclic Prefix (CP).

**3.** The method according to claim 1, **characterized in that** the step of the OMC configuring the parameters for reverse test coverage for the base station and synchronously configuring the parameters to the mobile transmitter comprises:

before the network is set up, bearing a signal of the mobile transmitter on an Uplink Pilot Time Slot (UpPTS) of a special subframe, configuring a Sounding Reference Signal (SRS) on a conventional service subframe, allocating UpPTS bandwidth of the whole special subframe to the mobile transmitter, and using an extended CP.

**4.** The method according to claim 2 or 3, **characterized in that** the step of the OMC configuring the parameters of reverse test coverage for the base station and synchronously configuring the parameters to the mobile transmitter further comprises:

using $c_{\mathrm{init}} = n_{\mathrm{RNTI}} \cdot 2^{14} + \lfloor n_s/2 \rfloor \cdot 2^9 + N_{\mathrm{ID}}^{\mathrm{cell}}$ by a scrambling sequence, where $n_{\mathrm{RNTI}}$ is configured by the OMC and equal to the Gid allocated to the mobile transmitter;
using a Quadrature Phase Shift Keying (QPSK) by a modulation way to modulate a constellation diagram to make the constellation diagram the same as the QPSK constellation diagram of a normal UE service; and
configuring a CP of the subframe for reverse test coverage as the extended CP.

**5.** The method according to claim 4, **characterized in that** the step of the OMC configuring the parameters for reverse test coverage for the base station and synchronously configuring the parameters to the mobile transmitter further comprises:

when the network is set up, if the signal of the mobile transmitter is born on the conventional service subframe, a Media Access Control (MAC) layer scheduling a normal UE service on the service subframe for reverse test coverage to other subframes according to the configured parameters, and transmitting the parameters of reverse test coverage to an uplink physical layer to notify the uplink physical layer to receive the signal transmitted by the mobile transmitter; and
if the signal of the mobile transmitter is born on the UpPTS of the special subframe, allocating the SRS to the conventional service subframe.

**6.** A system for reverse test coverage, comprising: an Operations & Maintenance Center (OMC), a mobile transmitter, a base station, a background server and a network planning & optimization tool, wherein
the OMC is configured to configure parameters of reverse test coverage for the base station and synchronously configure the parameters to the mobile transmitter;
the mobile transmitter is configured to transmit a signal containing a longitude, a latitude, a timestamp and a transmission power to the base station according to the configuration;
the base station is provided with a data processing module and configured to perform a smoothing processing according to the signal and measured data, and then transmit a computed path loss and a computed Reference Signal Receiving Power (RSRP) to the OMC, wherein the smoothing processing comprising: judging whether the data is legal, and if so, parsing the data and combining it with the measured data for computation to obtain the path loss and the RSRP;
the background server is configured to store data containing the path loss and the RSRP transmitted by the OMC; and
the network planning & optimization tool is configured to acquire data in the background server for analysis to obtain a distribution graph showing a downlink signal coverage level of the base station.

**7.** The system according to claim 6, **characterized in that** the configuration for the base station by the OMC comprises the followings:

before the network is set up, a signal of the mobile transmitter is born on a conventional service subframe on which there is no normal User Equipment (UE) service;
the base station is configured to support the reverse test coverage of multiple mobile transmitters and is reduced in transmission code rate, each mobile transmitter using at least four Resource Blocks (RBs) for processing and being configured with a different Radio Network Temporary Identifier (RNTI), and a value of the RNTI for scrambling is configured as a Group identifier (Gid) of the mobile transmitter; and
an extended Cyclic Prefix (CP) is used.

8. The system according to claim 6, **characterized in that** the configuration for the base station by the OMC comprises the followings:

before the network is set up, a signal of the mobile transmitter is born on an Uplink Pilot Time Slot (UpPTS) of a special subframe, an Sounding Reference Signal (SRS) is configured on a conventional service subframe, UpPTS bandwidth of the whole special subframe is allocated to the mobile transmitter, and an extended CP is used.

9. The system according to claim 7 or 8, **characterized in that** the configuration for the base station by the OMC further comprises the followings:

a scrambling sequence uses $c_{\mathrm{init}} = n_{\mathrm{RNTI}} \cdot 2^{14} + \lfloor n_{\mathrm{s}}/2 \rfloor \cdot 2^9 + N_{\mathrm{ID}}^{\mathrm{cell}}$ , where $n_{\mathrm{RNTI}}$ is configured by the OMC and equal to the Gid allocated for the mobile transmitter;
a modulation way uses a QPSK to modulate a constellation diagram to make the constellation diagram the same as the QPSK constellation diagram of a normal UE service; and
a CP of the subframe for reverse test coverage is configured as the extended CP.

10. The system according to claim 9, **characterized in that** the configuration for the base station by the OMC further comprises the followings:

when the network is set up, if the signal of the mobile transmitter is born on the conventional service subframe, an Media Access Control (MAC) layer schedules a normal UE service on the service subframe for reverse test coverage to other subframes according to the configured parameters, and transmits the parameters of reverse test coverage to an uplink physical layer to notify the uplink physical layer to receive the signal transmitted by the mobile transmitter; and
if the signal of the mobile transmitter is born on the UpPTS of the special subframe, the SRS is allocated to the conventional service subframe.

Start

10 — A background network administrator OMC configures parameters for reverse test coverage for a base station and synchronously configures the parameters to a mobile transmitter

20 — The mobile transmitter transmits a signal containing a longitude, a latitude, a timestamp and a transmission power to the base station according to the configuration

30 — The base station performs a smoothing processing according to the signal and the measured data, and then transmits a computed path loss and a computed RSRP to the OMC by the User Datagram Protocol (UDP)

40 — The background server stores the data containing the path loss and the RSRP transmitted by the OMC

50 — A network planning & optimization tool acquires data in the background server for analysis to obtain a distribution graph showing a downlink signal coverage level of the base station

End

Fig.1

| Radio frame i | | | Radio frame i +1 | | | Radio frame i+2 | | | Radio frame i +3 | | |
|---|---|---|---|---|---|---|---|---|---|---|---|
| Subframe 4RB:48bit | | | Subframe 4RB:48bit | | | Subframe 4RB:48bit | | | Subframe 4RB:48bit | | |
| 8 | 24 | 16 | 8 | 24 | 16 | 8 | 24 | 16 | 8 | 24 | 16 |
| Synchronous head:all 1 | Data 1 | CRC | Synchronous head:all 0 | Data 2 | CRC | Synchronous head:all 0 | Data 3 | CRC | Synchronous head:all 0 | Data 4 | CRC |

Fig.2

**Start**

101 — An OMC configures parameters for reverse test coverage for a base station and synchronously configures the parameters to a mobile transmitter

102 — In the initial stage of network setup, all the subframes of all the cells for reverse test coverage are configured as extended CPs

103 — The OMC transmits a reverse test coverage command to the base station

104 — The MAC layer transmits the parameters of reverse test coverage to an uplink physical layer, and the uplink physical layer starts the measurement task for the mobile transmitter to measure related data signals and prepares to receive an uplink signal of the mobile transmitter

105 — The mobile transmitter transmits the uplink signal to the base station according to the configured parameters, and the uplink physical layer receives the signal of the mobile transmitter and transmits the received signal and measured data signal to a data processing module

106 — The data processing module performs a smoothing processing on the received signal and measured data signal

107 — The OMC processes the data and save the data to a background server to obtain a distribution graph showing the downlink RS coverage level of all the base stations of the whole network

**End**

Fig.3

Fig.4

```
                              ┌─────────────┐
                              │    Start    │
                              └─────────────┘
                                     │
                                     ▼
A ──── │ An OMC configures parameters of reverse test coverage
       │ for a base station and synchronously configures the
       │ parameters to a mobile transmitter

B ──── │ The OMC background configures an SRS to other normal
       │ service subframes and configures the CP of the UpPTS of
       │ a special subframe as an extended CP

C ──── │ The OMC transmits a reverse test coverage command to
       │ the base station

D ──── │ The uplink physical layer starts the measurement task for
       │ the mobile transmitter and prepares to receive an uplink
       │ signal of the mobile transmitter

E ──── │ The mobile transmitter transmits the uplink signal to the
       │ base station according to the configured parameters, and
       │ the uplink physical layer receives the signal of the mobile
       │ transmitter and transmits the received signal and the
       │ measured data signal to the data processing module

F ──── │ The data processing module performs a smoothing
       │ processing on the received signal and measured
       │ data signal

G ──── │ The OMC processes the data and save the data to a
       │ background server to obtain a distribution graph
       │ showing the downlink RS coverage level of all the base
       │ stations of the whole network

                              ┌─────────────┐
                              │     End     │
                              └─────────────┘
```

Fig.5

Start

1 — An OMC configures parameters of reverse test coverage for a base station and synchronously configures the parameters to a mobile transmitter

2 — The OMC background configures the subframe for reverse test coverage of the base station as an extended CP

3 — The OMC transmits a reverse test coverage command to a management module of the base station, and the management module transmits the reverse test coverage command to an MAC layer according to the interface between the management module and each module

4 — The MAC layer schedules a normal UE service on the subframe for reverse test coverage to other subframes according to the configured parameters

5 — The MAC layer transmits the parameters for reverse test coverage to an uplink physical layer, and the uplink physical layer starts the measurement task for the mobile transmitter and prepares to receive an uplink signal of the mobile transmitter

6 — The mobile transmitter transmits the uplink signal to the base station according to the design of the physical layer described above and the configured transmitting period

7 — The uplink physical layer receives the signal of the mobile transmitter, and transmits the received signal and the measured signal to a data processing module for reverse test coverage, and the data processing module performs a smoothing processing

8 — The OMC processes the data to obtain a distribution graph showing the downlink RS coverage level of all the base stations of the whole network

End

Fig.6

Mobile transmitter

Transmit an uplink signal to a base
station at a fixed power

~20

~30

Base station

Uplink physical layer

Receive original data · Configure parameters

Data processing
module

~31

Management
module

Processed data

Configure
parameters

~10

OMC 〔 Background network administrator〕

~40

Background server

Processed data (offline
acquisition)

~50

Network planning & optimization tool

Fig.7

# INTERNATIONAL SEARCH REPORT

| International application No. |
|---|
| PCT/CN2011/075949 |

## A. CLASSIFICATION OF SUBJECT MATTER

H04W 24/00 (2009.01) i

According to International Patent Classification (IPC) or to both national classification and IPC

## B. FIELDS SEARCHED

Minimum documentation searched (classification system followed by classification symbols)

IPC: H04W H04B

Documentation searched other than minimum documentation to the extent that such documents are included in the fields searched

Electronic data base consulted during the international search (name of data base and, where practicable, search terms used)

CNABS,CNTXT,VEN: reverse, measure+, test+, cover+, base w station?, mobil+, signal?, parameter?, RB, resource w block?, RNTI, UPPTS, SRS, OMC, smooth+

## C. DOCUMENTS CONSIDERED TO BE RELEVANT

| Category* | Citation of document, with indication, where appropriate, of the relevant passages | Relevant to claim No. |
|---|---|---|
| Y | CN101262278A（ZTE CORP）10 Sep. 2008 (10.09.2008) the description page 5 line 10- page 7 line 3 | 1-3,6-8 |
| Y | CN101778463A（CHINA MOBILE COMM CORP）14 Jul. 2010 (14.07.2010) the description paragraphs [0035]-[0048] | 1-3,6-8 |
| Y | CN101404794A（ZTE CORP）08 Apr. 2009 (08.04.2009) the description page 1 line 7- page 5 line 32 | 2,3,7,8 |
| A | CN101431764A（CHINA MOBILE GROUP FUJIAN CO） 13 May 2009 (13.05.2009) the whole document | 1-10 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 Sep. 2011 (01.09.2011) | **29 Sep. 2011 (29.09.2011)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LV Wei** Telephone No. (86-10)62411478 |

Form PCT/ISA /210 (second sheet) (July 2009)

**INTERNATIONAL SEARCH REPORT**
Information on patent family members

International application No.

*PCT/CN2011/075949*

| Patent Documents referred in the Report | Publication Date | Patent Family | Publication Date |
|---|---|---|---|
| CN101262278A | 10.09.2008 | none | |
| CN101778463A | 14.07.2010 | WO2010078713A1 | 15.07.2010 |
| CN101404794A | 08.04.2009 | none | |
| CN101431764A | 13.05.2009 | CN101431764B | 02.06.2010 |

Form PCT/ISA /210 (patent family annex) (July 2009)